# EUROPEAN PATENT SPECIFICATION

(11) **EP 3 057 380 B1**
(45) Date of publication and mention of the grant of the patent: **27.09.2017**
(21) Application number: 16152211.5
(22) Date of filing: 21.01.2016
(51) Int. Cl.: H05B 1/02, F16L 53/00

(54) **POWERING WIRELESS COMPONENTS IN A HEAT TRACE SYSTEM**
STROMVERSORGUNG DRAHTLOSER KOMPONENTEN IN EINEM BEGLEITHEIZUNGSSYSTEM
ALIMENTATION DES COMPOSANTS SANS FIL DANS UN SYSTÈME DE SUIVI DE CHALEUR

(30) Priority: 10.02.2015 US 201514618217
(43) Date of publication of application: 17.08.2016
(73) Proprietor: Chromalox, Inc., Pittsburgh, PA 15238 (US)
(72) Inventor: HEILIGENSTEIN, Adam, Pittsburgh PA 15238 (US)
(74) Representative: Parry, Simon James

(56) References cited:
- DE-A1-102013 206 247
- US-A- 5 900 179
- US-A1- 2011 163 082
- US-A1- 2011 320 048

## Description

The present invention relates to a heat trace system, and to a related method.

Heat trace systems are commonly used in industrial and commercial settings to maintain or raise the temperature of pipes or tanks in a piping system through the use of electrical heating elements or heat traces that are in physical contact with the pipe or tank, as the case may be. Most heat trace systems are controlled by a main control system and also include many types of sensors and control devices throughout the piping system. The main control system receives data about conditions of the heat trace system that are detected by the various sensors and control aspects of the heating system by controlling the various control devices.

While wireless sensors and control devices have gained acceptance in many industries, they have not gained much acceptance in heat trace systems because there is no suitable way to power the wireless modules. Batteries are not preferred in heat trace systems because a battery failure could result in catastrophic failure (such as when a frozen pipe bursts when a wireless sensor with a spent battery is unable to detect the decreasing temperature of the pipe). Also, running power cables to the wireless devices is expensive and defeats the purpose of having a wireless device.

United States Patent Application US 2011/0163082 A1 discloses a wireless electric heat trace and vibration control and monitoring system.

According to a first aspect of the present invention there is provided a heat trace system for heating vessels in a piping system, the heat trace system comprising a main control system comprising an electrical power source; a plurality of heat trace elements, wherein each of the plurality of heat trace elements is adjacent to at least one of the vessels of the piping system, and wherein each of the plurality of heat trace elements is connected to the electrical power source of the main control system; and a plurality of wireless modules distributed throughout the piping system, wherein each wireless module: is connected to and powered by an associated heat trace element of the plurality of heat trace elements; comprises an energy storage device connected to the associated heat trace element for storing energy from the associated heat trace element, wherein the energy stored by the energy storage device from the associated heat trace element is for powering the wireless module; and comprises an RF module for communicating wirelessly with the main control system via a wireless communication network.

According to another aspect of the present invention, there is provided a method for a heat trace system that heats vessels of a piping system, wherein the heat trace system comprises a main control system comprising an electric power source; a plurality of heat trace elements that are each adjacent to a vessel of the piping system, and wherein the plurality of heat trace elements are connected to the electrical power source of the main control system; and a plurality of wireless modules distributed throughout the piping system, wherein each of the plurality of wireless modules is connected to and power by an associated one of the plurality of heat trace elements, the method comprising storing energy, by each wireless module, in an energy storage device, from a voltage difference across the wireless module's associated heat trace element; powering each wireless module with the stored energy from the energy storage devices; and communicating, by each wireless module with the main control system, wirelessly via a wireless communication network.

The present invention is thus directed to a heat trace system used for heating vessels (e.g., pipes or tanks) in a piping system or installation. In particular, the heat trace system can comprise a number of wireless modules distributed throughout the heat trace system that are in wireless communication with a main control system for the heat trace system via a wireless communication network. Each wireless module is connected to and powered by the voltage from an associated heat trace element. In that connection, the wireless modules may comprise an energy storage device that stores charge from the voltage difference across the buss wires of the heat trace element. The charge stored in the energy storage devices (e.g., supercapacitors) is used to electrically power the other components of the respective wireless modules. Further, the wireless modules can transmit the charge level of their energy storage device to the main control system via the wireless communication network. The main control can then compare the received charge levels to desired charge levels and, if below a threshold level, adjust (increase) the voltage level of the appropriate heat trace element to thereby allow the energy storage device of wireless module connected to that heat trace element to increase its charge level to at least the threshold level. As such, the main control system can momentarily power up the wireless modules at times when their energy storage devices are running low. Powering the wireless modules with the heat trace cables in such a manner obviates the need for batteries at the wireless modules, and obviates the need to use separate power lines (separate from the heat trace cables) to power the wireless modules.

These and other benefits of the present invention will be apparent from the description that follows.

Various embodiments of the present invention are described herein by way of example in conjunction with the following figures, wherein:
Figure 1 is a simplified block diagram of a heat trace system according to various embodiments of the present invention;
Figure 2 illustrates aspects of a heat trace cable according to various embodiments of the present invention;
Figures 3 and 4 are side views of a pipe section with a heat trace according to various embodiments of the present invention;
Figure 5 is a cross-sectional view of a pipe section with a heat trace according to various embodiments of the present invention;
Figure 6 is a block diagram of a sensor module according to various embodiments of the present invention;
Figure 7 diagrams a process flow of the controller according to various embodiments of the present invention;
Figure 8 is a block diagram of a sensor module according to various embodiments of the present invention; and
Figure 9 is a diagram of a piping system with a heat trace system and various wireless modules according to various embodiments of the present invention.

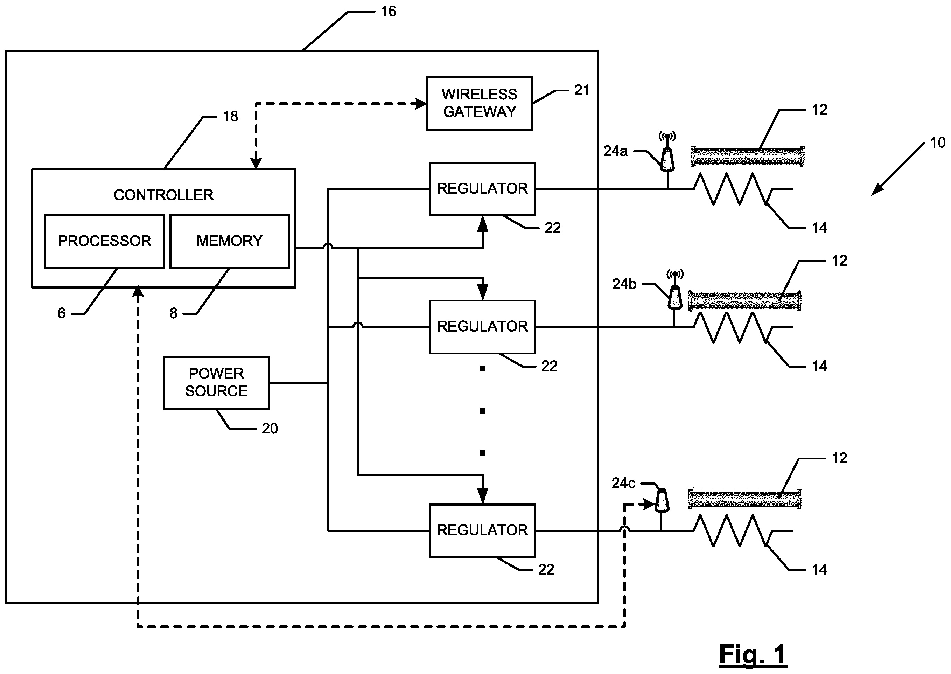

The present invention is directed generally to systems and methods for powering wireless components (or modules) in a heat trace system. Heat traces are used to heat pipes or tanks (collectively referred to herein sometimes as "vessels") in a piping system that carries fluids. Figure 1 is a simplified block diagram of a heat trace system 10 according to various embodiments of the present invention. For the sake of simplicity, Figure 1 only shows the heat trace system being used for three separate sections of pipe 12 in the heating system, although it should also be recognized that heat traces could be used for other types of liquid-carrying or - containing vessels in the system, such as tanks, etc.

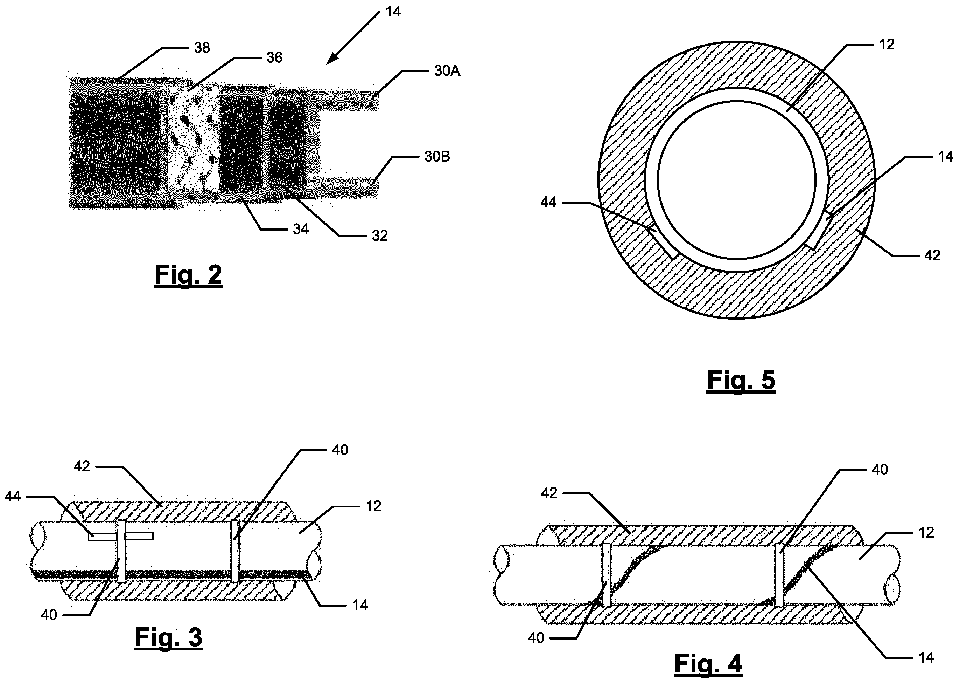

In the example of Figure 1, each illustrated heat trace 14 is proximate to its associated pipe section 12 for heating its associated pipe section 12. Of course, in an industrial setting, there are likely to be many more sections of pipe that need heated. More details regarding the heat traces 14, which are shown schematically in Figure 1 as resistors, are provided below in connection with Figures 2 through 5. In particular, as described below, the heat traces 14 are preferably in contact with the pipe sections 12, and covered with insulation. The heat traces 14 are preferably electrical heating elements that heat the pipe sections 12 when conducting electrical current. Heat generated by the heat traces 14 is for maintaining the temperature of the pipe 12. Trace heating may be used to protect pipes from freezing, to maintain a constant flow temperature in hot water systems, or to maintain process temperatures for piping that must transport substances that solidify at ambient temperatures.

As shown in Figure 1, the heat trace system 10 may include a central or distributed microprocessor-based main control system 16. The main control system 16 may comprise, among other things, a controller and a power source 20. The controller 18 may be implemented as a smart, microprocessor-based, computer device (or a network of such devices) that, through programming, controls the operation of the heating system, including controlling the current applied to the heat traces 14 (to thereby control the heating therefrom) and controlling other components of the heating system as described further below. In that connection, the controller 18 may comprise at least one microprocessor 6 and at least one semiconductor memory unit 8. The memory unit 8 stores instructions, e.g., software or firmware, that is executed by the processor 6. Among other things, the controller 18 controls individually the current supplied to the various heat traces 14 through individual loops - one loop for each heat trace 14 - to thereby control the heating of the pipes 12 in the piping system. The power source 20 may include AC mains power, e.g., 100 - 480 VAC three phase. The power source 20 is connected to the heat traces 14 via regulators 22 on each loop. The regulators 22 control the voltage from the power source 20 applied to each loop. In various embodiments, the regulators 22 comprise power control devices, such as silicon-controlled rectifiers (SCRs), solid state relays (SSRs), traces, or contactors. The controller 18 controls the duty cycles of the power control devices to thereby control the voltage applied to its associated heat trace 14.

The heat trace system 10 also includes a number of wireless components (or "modules") throughout. The components can include wireless sensors such as, for example, temperature sensors, flow measurement sensors, tank level measurement sensors, tank level switches, pressure sensors, vibration sensors, valve position sensors, open/close contact sensors, pH monitors, density monitors, etc. The wireless components can also include non-sensor wireless devices for the heating system, such as valve actuators, wireless repeaters, etc. Initially, various aspects for powering wireless components of a heat trace system according to the present invention will be described in the context of wireless temperature sensor modules, although it should be recognized that the powering techniques of the present invention could be used for such other types of wireless components in the heat trace system.

As shown in Figure 1, wireless temperature sensor modules 24a-c may be distributed throughout the piping system and include a temperature sensor for sensing the temperature of various pipe sections 12 in the piping system. The sensor modules 24a-c preferably include a resistance temperature detector (RTD). The sensed temperature is reported back by the sensor modules 24a-c to the controller 18 of the main control system 16. The controller 18 is programmed to compare the sensed temperatures to desired, set point temperatures (which may be, and usually are, different for different pipe sections 12), and control the regulators 22 based on the comparisons to achieve desired output voltages. Chromalox Inc.'s intelliTRACE® ITLS panel is an example of a suitable main control system 16. It may include (in addition to the processor 6 and semiconductor memory 8) a touch-screen user interface that allows a user to easily program the main control system 16 to the desired heat levels for each heat trace 14 being controlled by the main control system 16.

In Figure 1, two of the sensor modules 24a-b are shown as wireless sensors that communicate wirelessly with the main control system 16 via, for example, a self-organizing, self-healing wireless mesh communication network. The wireless mesh communication network could be based on the IEEE 802.11 standard, the IEEE 802.15.4 standard, or the ISA-100.11a standard, for example. The control system 16 may include a wireless gateway 21 to receive the communications from the wireless sensor modules 24a-b in such an embodiment. The wireless gateway may be, for example, a WirelessHART Gateway from Pepperl+Fuchs. In other embodiments, some or all of the sensor modules 24 may have a wired data connection to the main control system 16, such as sensor module 24c illustrated in Figure 1. The wired connection may be, for example, an Ethernet connection or twisted pair cables An important aspect of the present invention, however, is that the sensor modules 24a-c are powered by the heat traces themselves, thereby obviating the need for batteries or separate power lines for the sensor modules 24a-c. This aspect is described in more detail below.

Figure 2 is a diagram of a heat trace 14 that shows, in a cut-away view, its various layers according to various embodiments of the present invention. The heat trace 14 includes two buss wires 30A, B surrounded by a conductive matrix 32 (which is preferable polymeric). The conductive matrix 32 in turn may be surrounded a jacket 34, which may be surrounded by a metallic (e.g., tinned copper) braid 36 and an overcoat over braid 38 (preferably Teflon). The buss wires 30A, 30B carry electrical current from the power source 20, and the heat from the heat trace 14 heats the pipe 12 that it contacts to offset any losses in the pipe temperature. Figures 3-5 show that the heat trace 14 is preferably placed in contact with the outside of the pipe section 14. Figure 3 shows an embodiment where the heat trace 14 runs straight along the pipe 14 and Figure 4 shows an embodiment where the heat trace 14 is spirally wound around the pipe 12. The heat trace 14 may be held in place against the pipe 14 by a fastener 40, such as fiberglass tape or banding. Further, the heat trace 14 and pipe 12 are preferably surrounded by thermal insulation 42. Figure 5 illustrates an exemplary cross-section view of the pipe 12. This figure shows that both the heat trace 14 and the temperature sensor 44 (e.g., RTD) of the sensor module 24 are located on the outside of the pipe 12. Preferably, the heat trace 14 and RTD 44 are at the lower portion of the pipe 12. In other applications, multiple heat traces 14 could be used for one pipe 12, in which case both heat traces 14 are preferably toward the bottom (e.g., at 4 and 8 o'clock positions), and the RTD 44 is toward the top of the pipe 12 (e.g., at the 2 o'clock position). Figure 3 shows an embodiment where a RTD 44 is banded to the pipe 12 toward the top of the pipe 12.

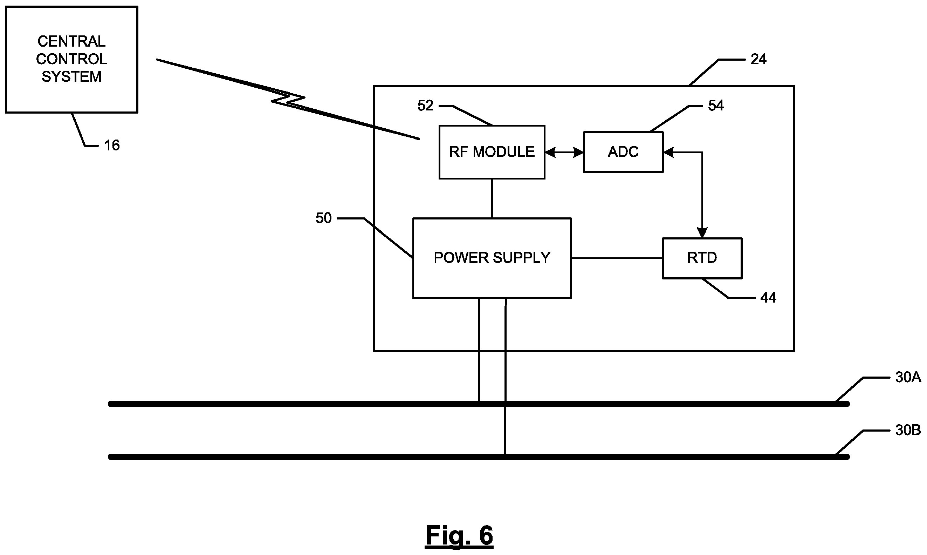

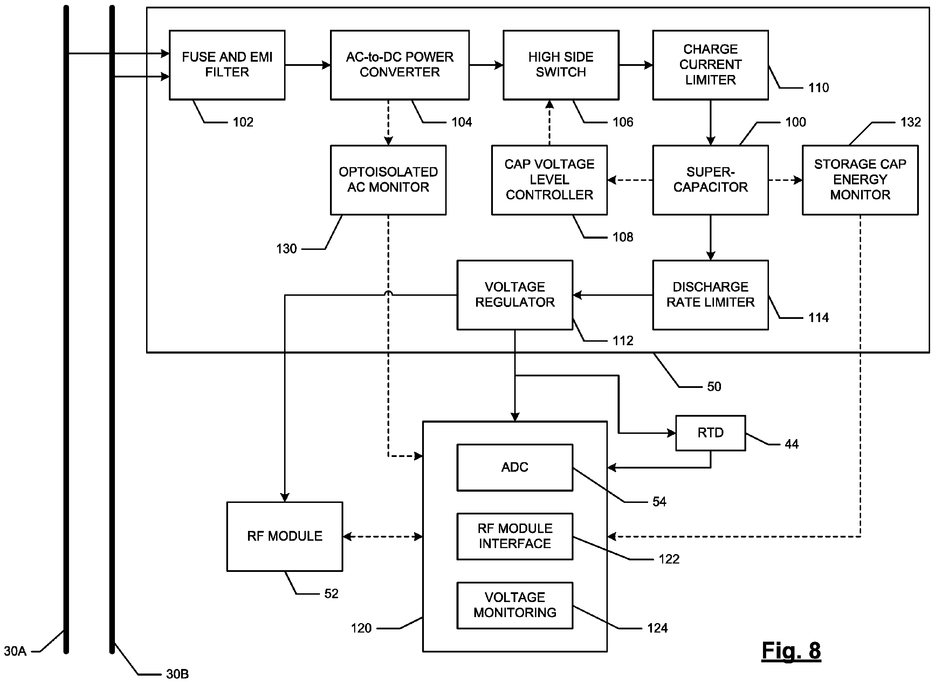

As mentioned above, the sensor modules 24 are powered with electrical current in the heat traces 14. Figure 6 is a simplified block diagram of a wireless sensor module 24 according to various embodiments of the present invention. As shown in Figure 6, the wireless sensor module 24 may be powered electrically by the voltage difference across the buss wires 30A-B of the heat trace 14 (e.g., a 120V or 240V difference, based on the power source 20). As such, the sensor module 24 may be spliced to the heat trace 14 at a desired location along the heat trace 14. The sensor module 24, as shown in Figure 6, may include a power supply 50 for converting the voltage from the buss wires 30A,B to desired voltage levels for powering the temperature sensor (RTD) 44 and an a RF communication module 52. The sensor module 24 may also include a microcontroller as described further below in connection with Figure 8.

The RTD 44 senses the temperature at a localized point of the pipe (see Figures 3-5). The sensed temperature is sent, via an analog-to-digital converter (ADC) 54, to the RF communication module 52, which transmits the temperature data wirelessly to the main control system 16 via the wireless communication network. The RF communication module 52 manages the RF communications between the sensor module 24 and the main control system 16, and may be implemented with, for example, an application specific integrated circuit (ASIC). In other embodiments, some or all of the sensor modules 24 have a wired data connection to the main control system 16, such as via Ethernet cables (not shown). By powering the sensor module 24 with the heat trace 14, there is no need for batteries to power the sensor modules 24 and it obviates the need for separate power lines (separate from the heat traces 14) for supplying power to the sensor modules 24 (which would defeat the purpose of the wireless sensors). One problematic issue, however, with powering the sensor modules 24 with the heat traces 14 is that at times one or more heat traces 14 in the installation may carry no or insufficient current to power the sensor modules 24 (for example, if there associated tank or pipe does not currently require heating). In typical installations, the main control system 16 queries the various sensor modules 24 for their temperature reading, and based on that reading, controls the heat trace voltage and hence temperature. The main control system 16 can also logically compare readings from multiple sensors 24 on one line by using Boolean logic to decide whether to turn the heat traces 14 on the line on or off.

In order to overcome this problem, in various embodiments the power supply 50 of the sensor module 24 comprises an energy storage device, such as a supercapacitor (sometimes referred to as an "ultracapacitor"), for storing energy from the voltage difference across the buss wires of the heat trace 14 (when there is a voltage difference). That stored energy may be used to power the various components of the sensor module 24 even when there is no current in the heat trace 14. The sensor modules 24 can periodically report the charge level of the energy storage device back to the controller 18 so that the controller 18 can momentarily supply current to the heat trace 14 to thereby recharge the energy storage device of the power supply 50 to a sufficient charge level (e.g., above some pre-established threshold charge level).

Figure 8 is a block diagram of a sensor module 24 according to an embodiment that uses a supercapacitor 100 as the energy storage device. The supercapacitor 100 may have a relatively large capacitance, such as 25 F with a full charge capacity/rating of 2.5 VDC, for example. In Figure 8, power flow is indicated by solid lines (with arrows) and sensing or control lines between components are indicated by dashed lines (with arrows). As shown in Figure 8, the power supply 50 may comprise a fuse and EMI filter 102 connected to the buss wires 30 A/B of the heat trace 14. An isolated AC-DC power converter converts the AC voltage from the heat trace 14 (after EMI filtering) to DC. A high-side switch 106 may be controlled by a capacitor voltage level controller 108 to conduct charging current to the supercapacitor 100 when the voltage across the capacitor is less than its maximum voltage rating (e.g., 2.5 V). Further, a charge current limiter 110 may limit the charge current supplied to the supercapacitor 100, such as to 100mA, for example. In various embodiments, the high-side switch 106 and the charge current limiter 110 may be combined in a single suitable power management switch. The capacitor voltage level controller 108 may be implemented as a CMOS op amp connected as a comparator, for example, whose output disables the high-side switch 106 above the maximum voltage (e.g., 2.5 VDC) and enables (turns on) the high-side switch 106 at a lower voltage (e.g., 2.4 VDC).

Discharge current from the supercapacitor 100 is supplied to a voltage regulator 112 via a discharge rate limiter 114, which limits the discharge of the supercapacitor 100 to, for example, 10 to 20 mA. The voltage regulator 112 may provide a regulated output voltage (e.g., 3.3 Vout) to the RF module 52 (if there is one), a microcontroller 120, and the sensor (e.g., RTD) 44 (or the sensor 44 could be powered indirectly by the microcontroller 120). The microcontroller 120 may comprise, in various embodiments, the ADC 54 (see Figure 6), an interface 122 for communicating with the RF module 52, and a voltage monitor module 124 for monitoring operation of the power supply 50. For example, as shown in Figure 8, the power supply may comprise an optoisolated AC monitor 130 that allows the microcontroller 120 (via the voltage monitor module 124) to monitor whether there is AC voltage from the heat trace 14. Also, the power supply 50 may comprise a monitor 132 that monitors the voltage across the supercapacitor 100. Based on input from the monitor 132, the microcontroller 120 (via the voltage monitor module 124) can estimate the energy remaining in the supercapacitor 100 and predict how much operating time remains on the supercapacitor 100. The microcontroller 120 can transmit periodically (e.g., every minute) data about the status of the supercapacitor 100 to the controller 18 (e.g., charge time remaining, present charge level, etc.) so that the controller 18 can determine whether to pulse -- and for how long to pulse -- the associated heat trace 14 with voltage so that the energy storage device can store more energy. The energy storage data reports sent by the sensor module 24 may be with the same periodicity as the sensed temperature reports; that is, the reports could include both the sensed temperature and the storage charge level of the energy storage device. In various embodiments, the controller 18 can dynamically scale the frequency of the reports to optimize energy consumption.

In various embodiments, a 100 mA charge rate would take 250 seconds to charge a 25 F supercapacitor from 0 VDC to 1 VDC, and a charge from 1 VDC to 2.5 VDC would require an additional 375 seconds. A full discharge cycle of the supercapacitor 100 from 2.5 VDC to 1 VDC would allow approximately 1300 minutes of operation for the sensor module 24, assuming 0.050 J per report from the sensor module 24 to the main control system 16 with a report every minute.

Such momentary increases in power will not ordinarily have other deleterious effects on the system as the rate of change of the temperature of the material in an insulated pipe is relatively slow and it is not required for the main control system 16 to continuously know the temperature of the pipe. Further, since the heat traces only provide thermal maintenance (e.g., offset heat losses) and do not heat the material in the pipe, the system thermal dynamics are slow. Therefore, momentary increases in power will not significantly affect the material in the pipe 12.

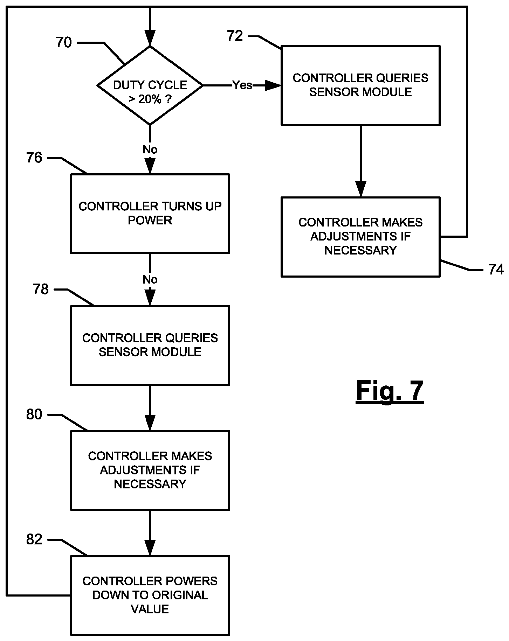

Figure 7 illustrates a process that the controller 18 may execute when communicating with one of the sensor modules 24 in another embodiment of the present invention. This embodiment may be used where the sensor module 24 does not include an energy storage device and the controller 18 needs to power up the heat traces to power up their associated sensor module. First, at step 70, the controller 18 checks the voltage on the loop of the sensor module 24. This may be done by checking the duty cycle of the regulator 22 for the loop. If the duty cycle is above some threshold where there is sufficient power to keep the sensor module 24 on (e.g., 20% as shown in the example of Figure 7), at step 72 the controller 18 can query the sensor module 24 for its temperature reading and, at step 74, control the regulator 22 for the loop based on the temperature data received from the sensor module (e.g., turn up or down the duty of the SCRs (or other power control devices) of the regulator 22 depending on whether the temperature is too low or too high compared to a specified set point). The appropriate threshold for step 70 of course will depend on the power requirements for the sensor module 24 and the available power from the power source 20. From there the process can loop back to step 70 for the next time the controller 18 needs to query the sensor module 24.

On the other hand, if at step 70 the duty cycle is below the threshold, there is presumptively insufficient power for the sensor module 24. Therefore, at step 76, the controller 18 turns up the power for the loop (e.g., increases the duty cycle of the SCRs) for a brief period of time to a level that is sufficient to power on the sensor module 24. Once powered on, at step 78 the controller 18 queries the sensor module 24 for its current temperature status and, at step 80, controls the regulator 22 for the loop based on the temperature data received from the sensor module 24. Then at step 82 it can return the power level of the loop to its original level (e.g., the level it was at before it was raised at step 76) and return back to step 70 again. The length of time for steps 76 to 82 in Figure 7 should be as brief as practical, yet long enough to power up the sensor module 24, obtain and report back the temperature data. For a wireless installation, depending on the number of sensor modules 24 and the geographic size of the layout, it may take several minutes for the mesh network to reestablish itself so that the temperature data can be reported back to the controller 18. The main control system 16 may have the capacity to control a finite number of heat trace loops, such as up to thirty six. If a piping installation requires additional heat trace loops, additional main control systems 16 may be used. Also, the components of a single main control system 16 may be embodied in a single control unit or panel, or the various components may be distributed across multiple, discrete, distributed control units or panels.

In various embodiments, the modules 24 may also be used to verify whether there is a break or otherwise diminished voltage connection between a heat trace 14 and its associated regulator 22, such as because of a break or loose connection in the heat trace wiring. In such an embodiment, a sensor module 24 may include a voltage sensor for sensing the voltage fed into its energy storage device 100 from the heat trace 14. The sensor module 24 can report this voltage back to the controller 18 so that the controller 18 can compare that voltage to the expected voltage from the heat trace's associated regulator 22. If the difference exceeds a threshold, the controller 18 determines that there is a compromised electrical connection to the heat trace 14 and reports an alarm.

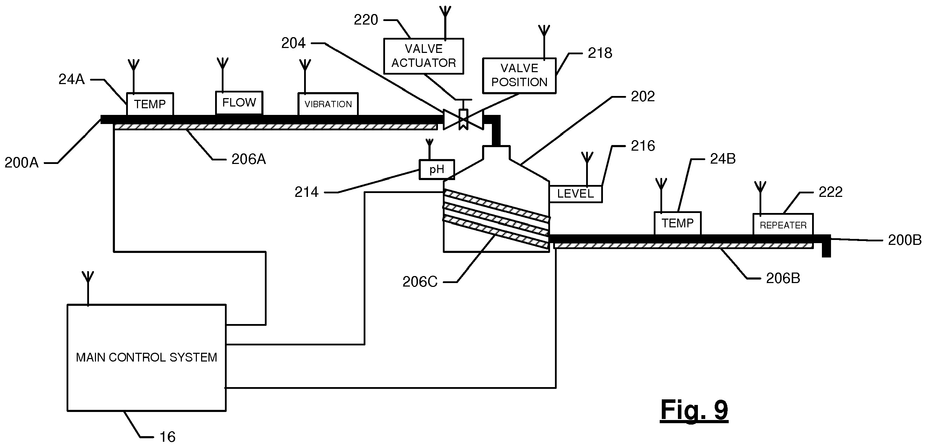

As mentioned above, the techniques described herein for powering wireless components in a heat trace system could be used for other types of wireless components beside temperature sensors. In that connection, Figure 9 is a diagram of a piping system with various types of wireless components that may be powered by the voltage across the heat trace elements according to the techniques described herein. The illustrative, simplified piping shown in the example of Figure 9 includes two fluid carrying pipes 200A, 200B, a tank 202, and a valve 204. The heat trace system includes a first heat trace 206A for heating the first pipe 200A, a second heat trace 206B for heating the second pipe 200B, and a third heat trace 206C for heating the tank 202. Each of the heat traces 206A-C is connected to and receives electrical power from the power supply 20 of the main control system 16

The illustrated wireless components in Figure 9 include temperature sensors 24A, 24B, a flow meter 210, a vibration sensor 212, a pH monitor 214, a tank level sensor 216, a valve position sensor 218, a valve actuator 220, and a wireless repeater 222. Each of these wireless modules 24A-B, 210, 212, 214, 216, 218, 220, 222 may be powered by their associated heat trace element 206A-C according as described above. For example, each of these wireless modules 24A-B, 210, 212, 214, 216, 218, 220, 222 may include an energy storage device (such as energy storage device 100 in Figure 8) that stores energy from the voltage difference across the buss wires of their associated heat trace element and uses that stored energy to power components of the wireless modules (as shown in the example of Figure 8), such as the sensor or actuators thereof, as the case may be. That way, separate power cables do not need to be run to each of the wireless modules.

Further, each of the wireless modules 24A-B, 210, 212, 214, 216, 218, 220, and 222 is in wireless communication with the main control system 16 via a wireless communication network. The wireless communication network could be a self-organizing, self-healing wireless mesh network, as described above.

Also, as described above in connection with the example wireless temperature sensor modules, each of the wireless modules 24A-B, 210, 212, 214, 216, 218, 220, and 222 could transmit wirelessly to the main control system 16 the charge level of their respective energy storage device 100 (or other data indicative of the charge level of the energy storage device). The processor(s) 6 of the main control system 16 (see Figure 1) can compare the received charged levels from the various wireless modules to determine whether they are sufficiently charged. If not, the main control system 16 can increase momentarily the voltage on the appropriate heat trace element(s) 206A-C so that the energy storage devices of the wireless modules can increase their charge levels. For example, if the charge level of the energy storage device of the flowmeter 210 is low, the main control system 16 can increase the voltage of the heat trace element 206A associated with (i.e., powering) the flowmeter 210 to thereby increase the charge level of the energy storage device of the flowmeter 210. The charge current limiters 110 (see Figure 8) of the other wireless modules connected to heat tracer element 206A (e.g., the vibration sensor 212, the valve position sensor 218, and the valve actuator 220) can limit the energy storage devices of those wireless components from storing additional charge if they do not need it.

The sensors may wirelessly transmit their sensed conditions (temperature, flow, fluid level, pH level, etc. as the case may be) to the main control system 16. The main control system 16 may control various control devices of the piping system based thereon. In that connection, for remote control devices such as the valve actuator 220, the main control system 16 may wirelessly transmit control commands to the valve actuator 220 as to how to control the valve 204 (open or close it, for example). The valve actuator 220 may wirelessly transmit conformation of the control command back to the main control system via the wireless communication network.

The temperature sensors 24A, 24B sense the temperature of their respective pipe section of the heating system and may be as described above in connection with Figures 6-8. The flow measurement sensor (or flowmeter) 210 measures bulk fluid movement in its associated pipe section 200A. The flowmeter 210 may comprise a differential pressure flowmeter, a magnetic flowmeter, a vortex flowmeter, or any other suitable type of flowmeter. It may periodically transmit wirelessly the measured fluid flow for its pipe section 200A to the main control system 16 via the wireless network. The vibration sensor 212 senses vibration of its associated pipe section 200A. The vibration sensor 212 may comprise, for example, one or more accelerometers for detecting movement due to vibrations in one or more directions (or degrees of freedom). It may periodically transmit wirelessly the measured vibration levels for its pipe section 200A to the main control system 16 via the wireless network. The pH monitor 214 can sense the pH level of the fluid in the tank 202 and periodically transmit wirelessly the measured pH levels to the main control system 16 via the wireless network. The level sensor 216 can sense the level of the fluid in the tank 202 and periodically transmit wirelessly the measured fluid levels to the main control system 16 via the wireless network. The level sensor 216 can comprise, for example, a tank fluid measurement device and/or a level switch. Tank level measurement devices can use non-contact level measuring technologies such as radar to detect the level of the fluid in the tank 294. Tank level switches are triggered when the fluid in the tank 204 reaches a pre-established level. The pH monitor 214 and the level sensor 216 can be connected to and powered by the heat trace element 206C used for heating the tank 204. The valve position sensor 218 can detect the position of the valve 204 and periodically transmit wirelessly the valve position status to the main control system 16 via the wireless network. The valve actuator 220 can actuate the valve 204 (open or close it, for example) based on control commands received wirelessly from the main control system 16 via the wireless network. The valve position sensor 218 and valve actuator 220 can be connected to and powered by any appropriate heat trace element, such as heat trace element 206A in Figure 9.

The wireless repeater 222 may rebroadcast wireless signals to and from the main control system 16 to thereby extend the wireless communication range of the main control system 16. It too may be connected to and powered by one of the power trace elements 206B in the manner described above.

The heat trace system may include additional sensors that are powered by a heat trace element and in wireless communication with the main control system 16 in the manners described herein. For example, the heat trace system may include open/closed contact sensors that sense whether various doors or windows in the system are opened or closed.

The various wireless modules 24A-B, 210, 212, 214, 216, 218, 220, 222 could all comprise components similar to that shown in Figure 8, except that the RTD 44 in Figure 8 will be replaced with the appropriate sensor type or control device of the wireless module.

In various embodiments, therefore, the present invention is directed to a heat trace system 10 for heating vessels 12 of a piping system. The invention heat trace system comprises a main control system 16 comprising an electrical power source 20; a plurality of heat trace elements; and a plurality of wireless modules distributed throughout the piping system. Each of the heat trace elements is adjacent to at least one of the vessels of the piping system (see Figures 1 and 9), and each is connected to the electrical power source 20 of the main control system 16 (see Figure 1). Each of the wireless modules: (a) is connected to and powered by an associated heat trace element of the plurality of heat trace elements (see Figures 6 and 8); (b) comprises an energy storage device 100 connected to the associated heat trace element for storing energy from the associated heat trace element to power the wireless module (see Figure 8); and (c) comprises an RF module 52 for communicating wirelessly with the main control system 16 via a wireless communication network (see Figures 6 and 8). As such, the stored energy in the energy storage device 100 can be used to power components of the wireless module, even when no current is flowing in the heat trace element to which the wireless module is connected.

In various implementations, the power source 20 of the main control system 16 comprises a plurality of voltage regulators 22 and each of the heat trace elements is connected to one of the voltage regulators 22 (see Figure 1). In addition, the RF module 52 of each wireless module may wirelessly transmit a charge level of the energy storage device 100 of the wireless module to the main control system 16. The main control system in turn may comprise a programmable controller 18 that is programmed to compare the charge levels of the energy storage devices of the wireless modules to desired charge levels and, based on the comparison, control an output voltage for one or more of the voltage regulators to thereby change the voltage across one or more of the heat trace elements. That way, for example, when a particular wireless module has a energy storage device with a low charge level (below a threshold), upon receiving the report of the low charge level, the main control system 16 can momentarily increase the power to the heat trace element to which the particular wireless module is connected, to thereby increase the energy storage level of the energy storage device of that particular wireless module.

The wireless modules may comprise wireless sensors or control devices of the heat trace system. In the case of wireless sensors, the wireless module comprises a sensor for sensing a condition of an associated vessel of the piping system. Examples of possible wireless sensors for which the present invention could be used include a temperature sensor, a flow measurement sensor, a tank level sensor, a valve position sensor, a pressure sensor, and a vibration sensor. At least some of the embodiments described herein may be implemented in many different embodiments of software, firmware, and/or hardware. The software and firmware code may be executed by a processor circuit or any other similar computing device. The software code or specialized control hardware that may be used to implement embodiments is not limiting. For example, embodiments described herein may be implemented in computer software using any suitable computer software language type, using, for example, conventional or object-oriented techniques. Such software may be stored on any type of suitable computer-readable medium or media, such as, for example, a magnetic or optical storage medium. The operation and behavior of the embodiments may be described without specific reference to specific software code or specialized hardware components.

Moreover, the processes associated with the present embodiments may be executed by programmable equipment, such as computers or computer systems. Software that may cause programmable equipment to execute processes may be stored in any storage device, such as, for example, a computer system (nonvolatile) memory, RAM, ROM, Flash Memory, etc.

In various embodiments disclosed herein, a single component may be replaced by multiple components and multiple components may be replaced by a single component to perform a given function or functions. Except where such substitution would not be operative, such substitution is within the intended scope of the embodiments.

While various embodiments have been described herein, it should be apparent that various modifications, alterations, and adaptations to those embodiments may occur to persons skilled in the art with attainment of at least some of the advantages. For example, certain steps shown in Figure 7 could be performed in different order than shown. The disclosed embodiments are therefore intended to include all such modifications, alterations, and adaptations without departing from the scope of the embodiments as set forth herein.

When used in this specification and claims, the terms "comprises" and "comprising" and variations thereof mean that the specified features, steps and integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilized for realizing the invention in diverse forms thereof.

While the invention has been described in conjunction with the exemplary embodiments described above, modification and variation will be apparent to those skilled in the art when given this disclosure. Accordingly, the exemplary embodiments of the invention set forth above are considered to be illustrative and not limiting. Various changes to the described embodiments may be made without departing from the scope of the invention as defined in the appended claims.

## Claims

1. A heat trace system for heating vessels (12, 200A, 200B, 202) in a piping system, the heat trace system comprising
a main control system (16) comprising an electrical power source (20);
a plurality of heat trace elements (14, 206A-C), wherein each of the plurality of heat trace elements is adjacent to at least one of the vessels of the piping system, and wherein each of the plurality of heat trace elements is connected to the electrical power source of the main control system; and
a plurality of wireless modules (24) distributed throughout the piping system, wherein each wireless module:
is connected to and powered by an associated heat trace element of the plurality of heat trace elements;
comprises an energy storage device (100) connected to the associated heat trace element for storing energy from the associated heat trace element, wherein the energy stored by the energy storage device from the associated heat trace element is for powering the wireless module; and co
mprises an RF module (52) for communicating wirelessly with the main control system via a wireless communication network;
wherein at least one of the wireless modules comprises a sensor (44) for sensing a condition of one of the plurality of vessels of the piping system, wherein the sensor is a sensor selected from the group consisting of a flow measurement sensor, a tank level sensor, a valve position sensor, a pressure sensor, a vibration sensor, an open/closed contact sensor, a pH monitor, and a density monitor.

2. The system of claim 1, wherein the energy storage devices of the plurality of wireless modules comprise supercapacitors.

3. The system of claim 1 or claim 2, wherein:
the power source of the main control system comprises a plurality of voltage regulators (22); and
each of the heat trace elements is connected to one of the voltage regulators.

4. The system of claim 3, wherein the RF module of each wireless module wirelessly transmits charge level data indicative of the charge level of the energy storage device of the wireless module to the main control system.

5. The system of claim 4, wherein the main control system comprises a programmable controller (18) that is programmed to:
compare the charge levels of the energy storage devices of the wireless modules to desired charge levels based on the charge level data received from the wireless module; and
control an output voltage for one or more of the voltage regulators based on the comparison to thereby change the voltage across one or more of the heat trace elements.

6. The system of claim 5, wherein the RF modules periodically transmit the charge level data of the energy storage device of their respective wireless module to the main control system.

7. A method for a heat trace system that heats vessels (12, 200A, 200B, 202) of a piping system, wherein the heat trace system comprises:
a main control system (16) comprising an electrical power source (20);
a plurality of heat trace elements (14, 206A-C) that are each adjacent to a vessel of the piping system, and wherein the plurality of heat trace elements are connected to the electrical power source of the main control system; and
a plurality of wireless modules distributed throughout the piping system, wherein each of the plurality of wireless modules is connected to and power by an associated one of the plurality of heat trace elements,
wherein at least one of the wireless modules comprises a sensor (44) for sensing a condition of one of the plurality of vessels of the piping system, and wherein the sensor is a sensor selected from the group consisting of a flow measurement sensor, a tank level sensor, a valve position sensor, a pressure sensor, a vibration sensor, an open/closed contact sensor, a pH monitor, and a density monitor
the method comprising:
storing energy, by each wireless module, in an energy storage device (100), from a voltage difference across the wireless module's associated heat trace element;
powering each wireless module (24) with the stored energy from the energy storage devices; and
communicating, by each wireless module with the main control system, wirelessly via a wireless communication network.

8. The method of claim 7, wherein:
the power source of the main control system comprises a plurality of voltage regulators (22); and
each of the heat trace elements is connected to one of the voltage regulators.

9. The method of claim 7 or claim 8, further comprising wirelessly transmitting, by each wireless module, charge level data indicative of the charge level of the energy storage device of the wireless module to the main control system.

10. The method of claim 9, further comprising:
comparing, by the main control system, the charge levels of the energy storage devices of the wireless modules to desired charge levels based on the charge level data received from the wireless modules; and
controlling, by the main control system, an output voltage for one or more of the voltage regulators based on the comparison to thereby change the voltage across one or more of the heat trace elements.

11. The system of claim 1, wherein each wireless module further comprises:
an AC-to-DC converter (104) that converts AC voltage from the associated heat trace element to DC voltage;
a high-side switch (106) connected to the AC-to-DC converter; and
a controller (108) for controlling the high-side switch; and
wherein the energy storage device comprises a supercapacitor (100) connected to the AC-to-DC converter via the high-side switch, wherein the supercapacitor is for storing energy from the associated heat trace element coupled to the supercapacitor by the AC-to-DC converter and the high-side switch, wherein the energy stored by the supercapacitor from the associated heat trace element is for powering the wireless module, and wherein the controller controls the high-side switch to conduct charging current to the supercapacitor when the voltage across the supercapacitor is less than its maximum voltage rating.

## Patentansprüche

1. Begleitheizungssystem für Heizkessel (12, 200A, 200B, 202) in einem Rohrleitungssystem, wobei das Begleitheizungssystem Folgendes umfasst:
ein Hauptsteuerungssystem (16), das eine elektrische Leistungsquelle (20) umfasst;
eine Vielzahl von Begleitheizungselementen (14, 206A-C), worin jedes aus der Vielzahl von Begleitheizungselementen an mindestens einen der Kessel des Rohrleitungssystem angrenzend angeordnet ist, und worin jedes aus der Vielzahl von Begleitheizungselementen mit der elektrischen Leistungsquelle des Hauptsteuerungssystem verbunden ist; und
eine Vielzahl von Drahtlos-Modulen (24), die im ganzen Rohrleitungssystem verteilt sind, worin jedes Drahtlos-Modul:
mit einem zugeordneten Begleitheizungselement aus der Vielzahl von Begleitheizungselementen verbunden ist und durch dieses versorgt wird;
eine Energiespeichervorrichtung (100) umfasst, die mit dem zugeordneten Begleitheizungselement zum Speichern von Energie von dem zugeordneten Begleitheizungselement verbunden ist, worin die durch die Energiespeichervorrichtung gespeicherte Energie aus dem zugeordneten Begleitheizungselement für das Versorgen des Drahtlos-Moduls ausgelegt ist; und
ein HF-Modul (52) für das drahtlose Kommunizieren mit dem Hauptsteuerungssystem über ein Drahtloskommunikationsnetzwerk umfasst;
worin mindestens eines der Drahtlos-Module einen Sensor (44) für das Abfühlen eines Zustands von einem aus der Vielzahl von Kesseln des Rohrleitungssystems umfasst, worin der Sensor ein Sensor ist, der aus derjenigen Gruppe ausgewählt ist, die aus einem Strömungsmesssensor, einem Tankfüllstandssensor, einem Ventilpositionssensor, einem Drucksensor, einem Schwingungssensor, einem offenen-/geschlossenen-Kontaktsensor, einem pH-Monitor und einem Dichte-Monitor besteht.

2. System nach Anspruch 1, worin die Energiespeichervorrichtungen aus der Vielzahl von Drahtlos-Modulen Superkondensatoren umfassen.

3. System nach Anspruch 1 oder Anspruch 2, worin:
die Leistungsquelle des Hauptsteuerungssystems eine Vielzahl von Spannungsreglern (22) umfasst; und
jedes der Begleitheizungselemente mit einem der Spannungsregler verbunden ist.

4. System nach Anspruch 3, worin das HF-Modul von jedem Drahtlos-Modul Ladungspegeldaten drahtlos übermittelt, die dem Hauptsteuerungssystem den Ladungspegel der Energiespeichervorrichtung des Drahtlos-Moduls anzeigen.

5. System nach Anspruch 4, worin das Hauptsteuerungssystem eine programmierbare Steuerungseinheit (18) umfasst, die zu Folgendem programmiert ist:
Vergleichen der Ladungspegel der Energiespeichervorrichtungen der Drahtlos-Module mit Soll-Ladungspegeln auf Basis der vom Drahtlos-Modul empfangenen Ladungspegeldaten; und
Steuern einer Ausgangsspannung für einen oder mehrere der Spannungsregler auf Basis des Vergleichs, um dadurch die Spannung an einem oder an mehreren der Begleitheizungselemente zu ändern.

6. System nach Anspruch 5, worin die HF-Module die Ladungspegeldaten der Energiespeichervorrichtung von deren entsprechendem Drahtlos-Modul an das Hauptsteuerungssystem periodisch übermitteln.

7. Verfahren für ein Begleitheizungssystem, das Kessel (12, 200A, 200B, 202) eines Rohrleitungssystems aufheizt, worin das Begleitheizungssystem Folgendes umfasst:
ein Hauptsteuerungssystem (16), das eine elektrische Leistungsquelle (20) umfasst;
eine Vielzahl von Begleitheizungselementen (14, 206A-C), die jeweils angrenzend an einen Kessel des Rohrleitungssystems angeordnet sind, und worin die Vielzahl von Begleitheizungselementen mit der elektrischen Leistungsquelle des Hauptsteuerungssystems verbunden ist; und
eine Vielzahl von Drahtlos-Modulen, die im ganzen Rohrleitungssystem verteilt sind, worin jedes aus der Vielzahl von Drahtlos-Modulen mit einem zugeordneten aus der Vielzahl von Begleitheizungselementen verbunden ist und durch dieses versorgt wird,
worin mindestens eines der Drahtlos-Module einen Sensor (44) zum Abfühlen eines Zustands von einem aus der Vielzahl von Kesseln des Rohrleitungssystems umfasst, und worin der Sensor ein Sensor ist, der aus derjenigen Gruppe ausgewählt ist, die aus einem Strömungsmesssensor, einem Tankfüllstandssensor, einem Ventilpositionssensor, einem Drucksensor, einem Schwingungssensor, einem offenen-/geschlossenen-Kontakt-Sensor, einem pH-Monitor und einem Dichte-Monitor besteht,
wobei das Verfahren Folgendes umfasst:
Speichern von Energie durch jedes Drahtlos-Modul in einer Energiespeichervorrichtung (100) aus einer Spannungsdifferenz an dem, dem Drahtlos-Modul zugeordneten Begleitheizungselement;
Versorgen von jedem Drahtlos-Modul (24) mit der aus den Energiespeichervorrichtungen gespeicherten Energie; und
drahtloses Kommunizieren durch jedes Drahtlos-Modul mit dem Hauptsteuerungssystem über ein Drahtlos-Kommunikationsnetzwerk.

8. Verfahren nach Anspruch 7, worin:
die Leistungsquelle des Hauptsteuerungssystems eine Vielzahl von Spannungsreglern (22) umfasst; und
jedes der Begleitheizungselemente mit einem der Spannungsregler verbunden ist.

9. Verfahren nach Anspruch 7 oder Anspruch 8, ferner umfassend das drahtlose Übermitteln durch jedes Drahtlos-Modul von Ladungspegeldaten, die dem Hauptsteuerungssystem den Ladungspegel der Energiespeichervorrichtung des Drahtlos-Moduls anzeigen.

10. Verfahren nach Anspruch 9, ferner umfassend:
Vergleichen der Ladungspegel der Energiespeichervorrichtungen der Drahtlos-Module durch das Hauptsteuerungssystem mit Soll-Ladungspegeln auf Basis der von den Drahtlos-Modulen empfangenen Ladungspegeldaten; und
Steuern einer Ausgangsspannung für einen oder mehrere der Spannungsregler durch das Hauptsteuerungssystem auf Basis des Vergleichs, um dadurch die Spannung an einem oder an mehreren der Begleitheizungselemente zu ändern.

11. System nach Anspruch 1, worin jedes Drahtlos-Modul ferner Folgendes umfasst:
einen Gleichstrom-Wechselstrom-Wandler (104), der Wechselstromspannung von dem zugeordneten Begleitheizungselement in Gleichspannung umwandelt;
einen High-Side-Schalter (106), der mit dem Wechselstrom-Gleichstrom-Wandler verbunden ist; und
eine Steuerungseinheit (108) zum Steuern des High-Side-Schalters; und
worin die Energiespeichervorrichtung einen Superkondensator (100) umfasst, der mit dem Wechselstrom-Gleichstrom-Wandler über den High-Side-Schalter verbunden ist, worin der Superkondensator für das Speichern von Energie aus dem zugeordneten Begleitheizungselement ausgelegt ist, das mit dem Superkondensator durch den Wechselstrom-Gleichstrom-Wandler und dem High-Side-Schalter gekoppelt ist, worin die durch den Superkondensator aus dem zugeordneten Begleitheizungselement gespeicherte Energie für das Versorgen des Drahtlos-Moduls ausgelegt ist, und worin die Steuerungseinheit den High-Side-Schalter steuert, um Ladestrom an den Superkondensator zu leiten, wenn die Spannung am Superkondensator geringer als dessen maximale Nennspannung ist.

## Revendications

1. Système de suivi de chaleur pour chauffer des récipients (12, 200A, 200B, 202) dans un système de canalisation, le système de suivi de chaleur comprenant un système de commande principal (16) comprenant une source d'alimentation électrique (20) ;
une pluralité d'éléments de suivi de chaleur (14, 206A-C), dans lequel chacun de la pluralité d'éléments de suivi de chaleur est adjacent à au moins un des récipients du système de canalisation, et dans lequel chacun de la pluralité d'éléments de suivi de chaleur est connecté à la source d'alimentation électrique du système de commande principal ; et
une pluralité de modules sans fil (24) répartis dans tout le système de canalisation, dans lequel chaque module sans fil :
est relié et alimenté par un élément de suivi de chaleur associé de la pluralité d'éléments de suivi de chaleur ;
comprend un dispositif de stockage d'énergie (100) connecté à l'élément de suivi de chaleur associé pour stocker de l'énergie provenant de l'élément de suivi de chaleur associé, dans lequel l'énergie stockée par le dispositif de stockage d'énergie provenant de l'élément de suivi de chaleur associé est destinée à alimenter le module sans fil ; et
comprend un module RF (52) pour communiquer sans fil avec le système de commande principal via un réseau de communication sans fil ;
dans lequel au moins l'un des modules sans fil comprend un capteur (44) pour détecter une condition de l'un de la pluralité de récipients du système de canalisation, dans lequel le capteur est un capteur choisi parmi le groupe constitué d'un capteur de mesure de débit, d'un capteur de niveau de réservoir, d'un capteur de position de soupape, d'un capteur de pression, d'un capteur de vibration, d'un capteur de contact ouvert/fermé, d'un contrôleur de pH et d'un contrôleur de densité.

2. Système selon la revendication 1, dans lequel les dispositifs de stockage d'énergie de la pluralité de modules sans fil comprennent des super-condensateurs.

3. Système selon la revendication 1 ou la revendication 2, dans lequel :
la source d'alimentation du système de commande principal comprend une pluralité de régulateurs de tension (22) ; et
chacun des éléments de suivi de chaleur est relié à l'un des régulateurs de tension.

4. Système selon la revendication 3, dans lequel le module RF de chaque module sans fil transmet sans fil des données de niveau de charge indiquant le niveau de charge du dispositif de stockage d'énergie du module sans fil au système de commande principal.

5. Système selon la revendication 4, dans lequel le système de commande principal comprend un dispositif de commande programmable (18) qui est programmé pour :
comparer les niveaux de charge des dispositifs de stockage d'énergie des modules sans fil aux niveaux de charge souhaités sur la base des données de niveau de charge reçues depuis le module sans fil ; et
commander une tension de sortie pour un ou plusieurs des régulateurs de tension sur la base de la comparaison pour ainsi changer la tension à travers un ou plusieurs des éléments de suivi de chaleur.

6. Système selon la revendication 5, dans lequel les modules RF transmettent périodiquement les données de niveau de charge du dispositif de stockage d'énergie de leur module sans fil respectif au système de commande principal.

7. Procédé pour un système de suivi de chaleur qui chauffe des récipients (12, 200A, 200B, 202) d'un système de canalisation, dans lequel le système de suivi de chaleur comprend :
un système de commande principal (16) comprenant une source d'alimentation électrique (20) ;
une pluralité d'éléments de suivi de chaleur (14, 206A-C), qui sont chacun adjacents à un récipient du système de canalisation, et dans lequel la pluralité d'éléments de suivi de chaleur sont connectés à la source d'alimentation électrique du système de commande principal ; et
une pluralité de modules sans fil répartis dans tout le système de canalisation, dans lequel chaque module sans fil de la pluralité de modules sans fil est relié et alimenté par un élément de suivi de chaleur associé de la pluralité d'éléments de suivi de chaleur ;
dans lequel au moins un des modules sans fil comprend un capteur (44) pour détecter une condition de l'un de la pluralité de récipients du système de canalisation, et dans lequel le capteur est un capteur choisi parmi le groupe constitué d'un capteur de mesure de débit, d'un capteur de niveau de réservoir, d'un capteur de position de soupape, d'un capteur de pression, d'un capteur de vibration, d'un capteur de contact ouvert/fermé, d'un contrôleur de pH et d'un contrôleur de densité
le procédé comprenant les étapes consistant à :
stocker de l'énergie, par chaque module sans fil, dans un dispositif de stockage d'énergie (100), à partir d'une différence de tension à travers l'élément de suivi de chaleur associé du module sans fil ;
alimenter chaque module sans fil (24) à l'aide de l'énergie stockée à partir des dispositifs de stockage d'énergie ; et
communiquer sans fil, par chaque module sans fil avec le système de commande principal, via un réseau de communication sans fil.

8. Procédé selon la revendication 7, dans lequel :
la source d'alimentation du système de commande principal comprend une pluralité de régulateurs de tension (22) ; et
chacun des éléments de suivi de chaleur est relié à l'un des régulateurs de tension.

9. Procédé selon la revendication 7 ou la revendication 8, comprenant en outre la transmission sans fil, par chaque module sans fil, de données de niveau de charge indiquant le niveau de charge du dispositif de stockage d'énergie du module sans fil au système de commande principal.

10. Procédé selon la revendication 9, comprenant en outre les étapes consistant à :
comparer, par le système de commande principal, les niveaux de charge des dispositifs de stockage d'énergie des modules sans fil à des niveaux de charge souhaités sur la base des données de niveau de charge reçues depuis les modules sans fil ; et
commander, par le système de commande principal, une tension de sortie pour un ou plusieurs des régulateurs de tension sur la base de la comparaison pour ainsi changer la tension à travers un ou plusieurs des éléments de suivi de chaleur.

11. Système selon la revendication 1, dans lequel chaque module sans fil comprend en outre :
un convertisseur AC-DC (104) qui convertit une tension AC de l'élément de suivi de chaleur associé en tension DC ;
un commutateur haute-tension (106) connecté au convertisseur AC-DC ; et
un dispositif de commande (108) pour commander le commutateur haute-tension ; et
dans lequel le dispositif de stockage d'énergie comprend un super-condensateur (100) connecté au convertisseur AC-DC via le commutateur haute-tension, dans lequel le super-condensateur est destiné à stocker de l'énergie provenant de l'élément de suivi de chaleur associé couplé au super-condensateur par le convertisseur AC-DC et le commutateur haute-tension, dans lequel l'énergie stockée par le super-condensateur provenant de l'élément de suivi de chaleur associé est destinée à alimenter le module sans fil, et dans lequel le dispositif de commande commande le commutateur haute-tension pour conduire un courant de charge dans le super-condensateur lorsque la tension à travers le super-condensateur est inférieure à sa tension nominale maximale.
